# EUROPÄISCHE PATENTSCHRIFT

(11) **EP 2 351 657 B1**
(45) Veröffentlichungstag und Bekanntmachung des Hinweises auf die Patenterteilung: **05.06.2013**
(21) Anmeldenummer: 10014734.7
(22) Anmeldetag: 18.11.2010
(51) Int. Cl.: B60G 9/00, B60G 17/0165, B62D 7/14, B60G 7/00

(54) **Nutzfahrzeug mit einer gelenkten Achse als Schwingungstilger**
Commercial vehicle with an articulated axle as a vibration absorber
Véhicule utilitaire doté d'un axe articulé comme réducteur de vibrations

(30) Priorität: 12.01.2010 DE 102010004320
(43) Veröffentlichungstag der Anmeldung: 03.08.2011
(73) Patentinhaber: MAN Truck & Bus AG, 80995 München (DE)
(72) Erfinder: Eberle, Andreas, 80678 München (DE)

(56) Entgegenhaltungen:
- EP-A1- 0 518 226
- EP-A1- 2 025 578
- EP-A2- 0 412 853
- EP-A2- 0 558 088
- EP-A2- 2 135 762
- WO-A1-2005/035335
- DE-A1- 3 300 640
- DE-A1- 3 939 822
- DE-A1- 19 635 462
- DE-A1-102004 056 610
- DE-A1-102007 033 533
- DE-C1- 4 127 750
- DE-U1- 29 608 229
- GB-A- 2 356 685
- JP-A- 61 218 427

## Beschreibung

### Technisches Gebiet:

Die Erfindung betrifft die Achsaufhängung einer gelenkten Starrachse, die über eine Lenkvorrichtung beweglich mit einem Rahmen, einer Karosserie oder einem Aufbau eines Fahrzeugs verbunden ist, wobei die Lenkvorrichtung wenigstens eine Stelleinheit aufweist, durch die eine Bewegung der Starrachse relativ zum Rahmen, zur Karosserie oder zum Aufbau in Abhängigkeit wenigstens eines mittels einer Sensoreinheit erfassten Betriebsparameters des Fahrzeugs steuerbar ist.

### Stand der Technik:

Oftmals verfügen insbesondere schwere LKW sowie Omnibusse zusätzlich zu einer vom Fahrer lenkbaren Vorderachse und einer angetriebenen, nicht lenkbaren Hinterachse über eine dritte Achse. Ist eine derartige dritte Achse hinter der angetriebenen Achse angeordnet, wird diese als Nachlaufachse bezeichnet. Entsprechend kann eine dritte Achse aber auch vor der angetriebenen Achse vorgesehen sein, wobei sie in diesem Fall als Vorlaufachse bezeichnet wird. Vor- und Nachlaufachsen sind vielfach nicht angetrieben und/oder liftbar, können aber auch als zusätzlich angetriebenen Achsen ausgeführt sein.

Weiterhin werden Fahrzeugradaufhängungen eingeteilt in solche, bei denen eine dritte Achse durch den Fahrzeugführer, insbesondere mittels einer kinematischen Kopplung an die Vorderachslenkung, lenkbar ist und solche, bei denen eine dritte Achse lediglich durch während der Fahrt auftretende Kräfte und/oder durch eine Steuerung in Abhängigkeit des Fahrzeugbetriebszustands gelenkt wird. Derartige nicht an die eigentliche Lenkung des Fahrzeugs gekoppelte Achsen werden als "frei lenkbare Achsen", manchmal auch als zwangsgelenkte Achsen bezeichnet, insbesondere, wenn diese ausschließlich durch während der Fahrt von der Fahrbahn auf die Achse wirkende Kräfte, vor allem während einer Kurvenfahrt auftretende Seitenkräfte, gelenkt werden. In diesem Zusammenhang wird darauf hingewiesen, dass die Erfindung ausschließlich Achsen des letztgenannten Typs betrifft, die nicht kinematisch an die Vorderachslenkung des Fahrzeugs gekoppelt sind.

Eine gattungsgemäße Achsaufhängung mit gelenkter angetriebener oder nicht angetriebener starrer Hinterachse ist aus der DE 296 08 229 U1 bekannt. Die beschriebene Hinterachs-Anlenkung verfügt über zwei längenvariable Längslenker sowie einen Dreieckslenker. Die beschriebene Achsaufhängung zeichnet sich vor allem dadurch aus, dass eine Steuereinheit sowie entsprechende Stellorgane vorgesehen sind, die die Länge der Längslenker derart beeinflussen, dass die Starrachse eine Bewegung relativ zum Fahrzeugrahmen ausführen kann. Hierbei sind vor allem die Stellstangen der Längslenker derart ausgeführt und steuerbar, dass geschwindigkeitsabhängig und / oder bei Kurvenfahrt ein Ausfahren der Stellstangen verhindert oder zumindest auf einen vorgebbaren Grenzwert beschränkt wird.

Weiterhin ist aus der WO2004/080783 eine gelenkte Achse bekannt, bei der durch eine Sperrung der zwangsgelenkten Achse die Seitenstabilität des Fahrzeugs bei Kurvenfahrt verbessert werden soll, sobald eine kritische Fahrsituation detektiert worden ist. Hierzu werden eine Vielzahl von Fahrzeugparametem, unter anderem Raddrehzahlen, Radbeschleunigungen, Schlupfwerte und Bremsmomente an einzelnen Rädern sowie Lenkwinkel erfasst, aus der erfassten Werten ein fahrsituationsspezifischer Kennwert ermittelt und sobald dieser fahrsituationsspezifischer Kennwert einen kritischen Wert annimmt, insbesondere bei Kurvenfahrt des Fahrzeugs, die Lenkung der zwangsgelenkten Achse gesperrt.

Der Vorteil derartiger gelenkter Achsen, die kinematisch nicht mit der eigentlichen Lenkung verbunden sind, besteht vor allem in der Minimierung des Reifenverschleißes bei Kurvenfahrt sowie in einer Erhöhung der Wendigkeit des Fahrzeugs. Nachteilig ist jedoch, dass Fahrzeuge, die über eine oder mehrere zwangsgelenkte Achsen verfügen, in der Regel eine geringere Seitensteifigkeit aufweisen, was insbesondere bei höheren Geschwindigkeiten zu einer Verringerung der Fahrstabilität führen kann.

Neben den Anforderungen an ein Fahrzeug im Hinblick auf die Fahreigenschaften, unter anderem an die Wendigkeit und Fahrstabilität, werden heutzutage an Fahrzeuge hohe Ansprüche hinsichtlich des Fahrkomforts gestellt. Der Fahrkomfort wird allerdings häufig durch in Abhängigkeit der Straßenverhältnisse sowie der Fahrgeschwindigkeit auftretende Schwingungen bzw. Vibrationen im Fahrwerk, im Rahmen und/oder in den Fahrzeugaufbauten beeinträchtigt.

In diesem Zusammenhang ist es etwa aus der DE 102 27 888 A1 sowie der DE 38 43 676 A1 bekannt, Schwingungstilger im Bereich der Fahrzeugfederung oder der Fahrzeugkarosserie vorzusehen, die selbst über eine schwingende Masse verfügen. Eine-geeignete Sensorik detektiert hierbei die in Fahrzeugen auftretenden Schwingungen, die schließlich durch die von den in Abhängigkeit der detektierten Schwingungen angeregten Schwingungstilgem ausgeführten Gegenschwingungen kompensiert werden.

Aus der EP 0 518 226 A1 ist ein Traktor mit einem Regelsystem zur aktiven Dämpfung von Nickschwingungen bekannt, bei dem die Masse der Vorderachse als Tilgermasse benutzt wird. Die Vorderachse ist am Fahrzeugrahmen über eine hydropneumatische Federung abgestützt, deren Hydrozylinder die Vorderachse während einer Transportfahrt bei unebenem Gelände so verstellen, dass eine angeregte Schwingung des Fahrzeugrahmens aktiv abgebaut wird.

Aus der EP 0 558 088 A2 ist eine Hinterrad-Lenkvorrichtung für ein Fahrzeug mit einem eine Blattfeder aufweisenden Aufhängungselement bekannt Mittels der Hinterrad-Lenkvorrichtung wird ein Hinterachsgehäuse von einem Hinterrad-Lenkantrieb um einen mittleren Abschnitt eines oberen Lenkers gedreht, so dass die Hinterräder des Fahrzeugs zuverlässig gelenkt werden können.

Aus der DE 33 00 640 A1 ist eine Einrichtung zum Lenken von Kraftfahrzeugen mit mindestens zwei Fahrzeugachsen bekannt, wobei eine manuell betätigbare Lenkvorrichtung zum Lenken der Vorderräder und eine Stellvorrichtung zur Durchführung geregelter, bei Lenkvorgängen erfolgender Lenkbewegungen an den Hinterrädern in Abhängigkeit von einer zumindest aus der vom Fahrzustand erwachsenden Querbeschleunigung resultierenden Steuergröße vorgesehen ist. Die Hinterräder sind bei Erreichen der Kraftschlußgrenze durch die Stellvorrichtung, unabhängig von Lenkbewegungen der Vorderrad-Lenkvorrichtung, ansteuerbar. Bei einer Zusatzlenkung für mehrachsige Fahrzeuge, insbesondere Personenkraftwagen, bei denen die Räder mindestens einer Fahrzeugachse mittels einer Lenkvorrichtung lenkbar sind, ist diesen Rädern eine Stellvorrichtung zugeordnet, die während eines Lenkvorganges zur Erzeugung überlagerter Lenkbewegungen unabhängig von der Lenkvorrichtung und in Abhängigkeit mindestens einer aus Fahr- und/oder Lenk- und/oder Beladungszuständen resultierenden Steuergröße ansteuerbar ist.

Aus der EP 2 025 578 A1 ist ein Verfahren zum Einstellen eines Lenkwinkels einer elektronisch gelenkten Achse eines Nutzfahrzeuges bekannt, wobei der Lenkwinkel der elektronisch lenkbaren Achse aus zumindest einem Lenkwinkel einer weiteren Achse und der Fahrzeuggeometrie ermittelt und eingestellt wird. Bei Erkennen eines instabilen Fahrzustandes wird der Lenkwinkel der elektronisch lenkbaren Achse entsprechend geändert.

Aus der DE 41 27 750 C1 ist eine Vorrichtung zur Erhöhung der Pendelstabilität von nicht spurgebundenen Fahrzeuggespannen, insbesondere von PKVV- Anhänger-Gespannen bekannt. Hierbei werden Sensoren bzw. Meßwertaufnehmer zur Ermittlung unerwünschter Pendelbewegungen des Anhängers bzw. hinteren Fahrzeuges oder Fahrzeugteiles relativ zum Zugfahrzeug bzw. vorderen Fahrzeug oder Fahrzeugteil angeordnet. Das Zugfahrzeug bzw. das vordere Fahrzeug oder Fahrzeugteil ist mit einer rechnergesteuerten selbsttätigen Zusatzlenkung ausgerüstet, deren Steuerung die Signale der Sensoren bzw. Meßwertaufnehmer verarbeitet und die Zusatzlenkung zur Ausführung von Gegenlenkmanövern zur Abschwächung der Pendelbewegungen ansteuert.

Aus der EP 0 412 853 A2 ist ein aktives Schwingungssteuergerät bekannt, welches die Schwingungen, die von einem beweglichen Grundteil auf einen Gegenstand übertragen werden, der auf dem Grundteil in schwingungsisolierender Weise aufgehängt ist, beträchtlich verringert. Dabei wird ein Schwingungsfühler vorgesehen, der am genannten Gegenstand befestigt ist, um dessen Schwingung zu erfassen. Des Weiteren wird eine Betätigungseinrichtung vorgesehen, die am genannten Gegenstand befestigt ist, um auf diesen eine umgekehrte Schwingung aufzubringen. Auf diese Weise kann die Schwingung des Gegenstandes durch eine entgegenrichtete Schwingung, die auf den Gegenstand von der Betätigungseinrichtung aufgebracht wird, zumindest unterdrückt werden.

Aus der WO 2005/035335 A1 ist ein Kraftfahrzeug, insbesondere Cabriolet-Fahrzeug, mit einer Fahrzeugkarosserie bekannt, bei welchem zumindest ein Paar von Streben und zumindest eine schwingungsselektive Aufnahmeeinheit zur Erfassung von im Fahrbetrieb auftretenden Längsbeanspruchungen der Streben vorgesehen ist. Des Weiteren ist zumindest ein Stellglied zum Bewirken einer einer Längsbeanspruchung entgegenwirkenden Kraft vorgesehen. Die zumindest beiden Streben sind über eine gegenüber der Karosserie beweglich gehaltene Halteeinrichtung verbunden, wobei der Halteeinrichtung ein gemeinsames Steilglied zur gleichzeitigen Beeinflussung von damit verbundenen Streben zugeordnet ist.

Ausgehend von den aus dem Stand der Technik bekannten Problemen liegt der Erfindung die Aufgabe zugrunde, eine Vorrichtung anzugeben, die bei Fahrzeugen mit Doppelachsaggregaten und wenigstens einer gelenkten Achse auftretende Schwingungen, auf verhältnismäßig einfache und zuverlässige Art kompensiert. Die Vorrichtung sowie ein darauf basierendes Verfahren sollen bevorzugt bei schweren Nutzfahrzeugen, die oftmals über großvolumige Aufbauten verfügen, anwendbar sein. Vor allem sollte eine entsprechende technische Lösung die Anzahl der erforderlichen Schwingungstilger, insbesondere für großvolumige Fahrzeuge, wie beispielsweise Reisebusse, zumindest erheblich verringern. Mit der anzugebenden Vorrichtung zur Schwingungstilgung sollte es des Weiteren möglich sein, mit einer verhältnismäßig einfachen Mess- und Regelungsstrategie geschwindigkeitsabhängig auftretende Schwingungen im Bereich eines Fahrzeugaufbaus sowie einer Fahrzeugkarosserie, insbesondere im Bereich eines Busgerippes, zu kompensieren.

Die zuvor genannte Aufgabe wird mit einer speziell ausgeführten Achsaufhängung gemäß Anspruch 1 sowie deren Einsatz in einem Nutzfahrzeug gemäß Anspruch 14 gelöst Vorteilhafte Weiterbildungen der Erfindung sind Gegenstand der abhängigen Ansprüche und werden im Folgenden unter teilweiser Bezugnahme auf die Figuren näher erläutert.

Die Erfindung beruht auf einer speziellen Ausführung einer Achsaufhängung mit einer gelenkten Starrachse, die über eine Lenkvorrichtung beweglich mit einem Rahmen, einer Karosserie oder einem Aufbau eines Fahrzeugs verbunden ist, wobei die Lenkvorrichtung wenigstens eine Stelleinheit aufweist, durch die eine Bewegung der Starrachse relativ zum Rahmen, zur Karosserie oder zum Aufbau in Abhängigkeit wenigstens eines mittels einer Sensoreinheit erfassten Betriebsparameters des Fahrzeugs steuerbar ist. Erfindungsgemäß ist die Achsaufhängung derart weitergebildet worden, dass die Sensoreinheit wenigstens einen Schwingungssensor aufweist, mit dem eine Schwingung wenigstens eines Bauteils des Fahrzeugs erfassbar und an eine Steuereinheit übertragbar ist, in der auf der Grundlage der erfassten Schwingung ein Steuersignal generierbar und an die Stelleinheit weiter leitbar ist, unter dessen Zugrundelegung die Starrachse durch die Stelleinheit derart in Bewegung versetzbar ist, dass durch die Bewegung der Starrachse erzeugte Schwingungen die erfassten Schwingungen des wenigstens einen Bauteils des Fahrzeugs zumindest teilweise kompensieren.

Mit erfindungsgemäßen Lösung ist es auf vergleichsweise einfache Weise möglich, während der Fahrt im Rahmen, in der Karosserie oder im Fahrzeugaufbau auftretende Schwingungen zu kompensieren, indem über die gelenkte Achse eine weitere Schwingung in das Fahrzeug eingekoppelt wird. Mit Hilfe einer Sensorik wird zunächst die im Fahrzeug auftretende Schwingung erfasst, in einer Steuereinheit ausgewertet und schließlich mit Hilfe einer geeigneten Stelleinheit die gelenkte Starrachse derart bewegt, dass Schwingungen erzeugt werden, die sich mit den erfassten Schwingungen zumindest weitgehend aufheben. Durch die in Abhängigkeit der erfassten Schwingung initiierte Bewegung der gelenkten Achse werden hierbei Kräfte erzeugt, die in den Fahrzeugrahmen, die Fahrzeugkarosserie oder den Fahrzeugaufbau eingeleitet und von diesem absorbiert werden müssen. Da diese Kräfte mit Hilfe der Stelleinheit und einer geeigneten Regelung auf vorteilhafte Weise in Stärke und periodischer Wiederkehr, insbesondere im Hinblick auf die Anregungsfrequenz, variiert werden, wird der Fahrzeugaufbau bzw. die Fahrzeugkarosserie zu Schwingungen angeregt, die sich mit in Abhängigkeit der Fahrbahnbeschaffenheit und / oder der Fahrgeschwindigkeit erzeugten Schwingungen zumindest weitgehend aufheben. Auf diese Weise kann zum Beispiel sicher gestellt werden, dass ursprünglich als unangenehm empfundene Schwingungen mit Hilfe der zusätzlich erzeugten Schwingung vermindert oder getilgt werden und so für Personen innerhalb des Fahrzeugs nicht mehr als unangenehm empfunden oder sogar nicht mehr wahrgenommen werden.

In einer bevorzugten Ausführungsform der Erfindung weist die Stelleinheit wenigstens einen pneumatisch, elektrisch und / oder hydraulisch angetriebenen Stellzylinder auf. Vorzugsweise ist in diesem Zusammenhang ein elektro-hydraulisch angetriebener Stellzylinder vorgesehen, der als Stelleinheit derart mit der zwangsgelenkten Starrachse zusammenwirkt, dass aufgrund einer Betätigung des Stellzylinders die Lenkvorrichtung und schließlich die Starrachse bewegbar sind. Je nach Ausführungsform der Lenkvorrichtung ist es denkbar einen oder auch mehrere Stellzylinder vorzusehen, die unmittelbar oder über geeignete Koppelelemente mit der Lenkvorrichtung in Wirkverbindung stehen.

In einer weiteren vorteilhaften Gestaltungsform der Erfindung verfügt die Achsaufhängung über wenigstens einen Längslenker. Bevorzugt ist im unteren Bereich der Starrachse an beiden Seiten jeweils ein Längslenker vorgesehen, während im oberen Bereich ein Dreieckslenker in seinem Kniebereich an der Starrachse befestigt ist. Im Hinblick auf ganz spezielle Weiterbildungen der Erfindung ist es denkbar, jedem Längslenker als Stelleinheit einen Stellzylinder zuzuordnen oder sogar den Stellzylinder in den Längslenker zu integrieren. Bei der letztgenannten Ausführungsform wird der Längslenker vorzugsweise selbst als Zylinder mit entsprechender Stellstange ausgeführt. In einer alternativen Ausführungsform ist ausschließlich ein Stellzylinder vorgesehen, der einerseits fahrzeugseitig, also am Rahmen, an der Karosserie oder am Aufbau befestigt ist, während er andererseits über ein Koppelelement mit der Lenkvorrichtung und hier insbesondere mit einem Längslenker verbunden ist.

Eine geeignete Weiterbildung in Bezug auf das Koppelelement sieht vor, dass dieses in Form eines drehbar gelagerten Hebels ausgeführt ist, wobei die Drehbewegung des Hebels näherungsweise in horizontaler Richtung erfolgt. Vorzugsweise steht die Starrachse hierbei über zwei Längslenker und einen Dreieckslenker mit dem Rahmen, der Karosserie oder dem Fahrzeugaufbau in Wirkverbindung, wobei die Längslenker jeweils einseitig mit einem Hebel verbunden sind, der mittig drehbar am Fahrzeugaufbau, der Fahrzeugkarosserie oder dem Fahrzeugrahmen gelagert ist. Wird der Hebel bei einer derartigen technischen Lösung von einem Stellzylinder bewegt, so dass dieser eine Drehbewegung ausführt, werden automatisch beide Längslenker in Fahrzeuglängsrichtung bewegt, wodurch wiederum eine Drehbewegung der gesamten Starrachse bewirkt wird. Diese Drehbewegung wird initiiert, da durch Drehen des Hebels die Längslenker gegensinnig zueinander verschoben werden, so dass beispielsweise der linke Längslenker in Fahrtrichtung gesehen nach vorne gezogen wird, während gleichzeitig der rechte Längslenker um den gleichen Betrag nach hinten verschoben wird.

Eine weitere vorteilhafte Ausführungsform der Erfindung sieht vor, dass der Dreieckslenker im Kniebereich seiner beiden Schenkel mittels eines Lagers am Achskörper der Starrachse befestigt ist. Die Wirklinien des Dreieckslenkers schneiden sich in diesem Punkt, so dass eine bewegte Starrachse letztendlich um diesen Punkt eine Drehbewegung bei Bewegung der Längslenker ausführt. Sobald eine zwangsgelenkte Hinterachse durch Betätigen der Stelleinheit und entsprechende Bewegung der Lenkvorrichtung, beispielsweise unter zu Hilfenahme eines Stellzylinders, gelenkt wird, wird die Masse der Hinterachse, die sich um den zuvor beschriebenen Drehpunkt bewegt, beschleunigt. Hierdurch wird in Abhängigkeit der Drehgeschwindigkeit der Starrachse eine Reaktionskraft erzeugt, die in den Rahmen, die Karosserie oder den Aufbau eines Fahrzeugs eingeleitet und von diesem bzw. dieser aufgenommen werden muss. Die auf diese Weise erzeugten Reaktionskräfte können durch eine geeignete, vorzugsweise elektrische Regelung zwischen vorgebbaren Grenzwerten in Stärke und periodischer Wiederkehr, also in ihrer Frequenz, verändert werden. Durch diese erfindungsgemäß herbeigeführte Einleitung von Reaktionskräften in das Fahrzeug mit Hilfe der gelenkten Achse, kann das Fahrzeug, im Speziellen der Rahmen, die Karosserie oder der Aufbau, zu Schwingungen angeregt werden. Durch eine geeignete Wahl bzw. Einstellung der Anregungsschwingungen ist es auf bevorzugte Weise möglich, im Fahrzeug aufgrund der Fahrbahneigenschaften in Verbindung mit der momentanen Fahrgeschwindigkeit auftretende Schwingungen zu kompensieren. Hierzu sind erfindungsgemäß eine Steuereinheit sowie wenigstens ein Schwingungssensor vorgesehen, mit denen eine im Bereich des Fahrzeugs auftretende Schwingung erfasst, ausgewertet und schließlich ein Stellsignal generiert wird, das an die zuvor beschriebene Stelleinheit übertragen wird.

In einer besonderen Ausführungsform der Erfindung ist der Längslenker und / oder der Dreieckslenker am achsfernen Ende mittelbar oder unmittelbar am Rahmen, an der Karosserie oder am Aufbau des Fahrzeugs befestigt. Als Befestigungsmittel kommen die üblicherweise verwendeten Bauelemente, wie etwa Lagerböcke mit dazugehörigen Lagerelementen, insbesondere Pratzenlagern, in Frage. Die Befestigung der Lenker an der Achse findet ebenfalls mit den bekannten Lagerelementen statt, wobei der Dreieckslenker in seinem Kniebereich bevorzugt Ober ein Pratzenlager an der Starrachse angelenkt ist.

Die erfindungsgemäß ausgeführte Achsaufhängung ist besonders für die Verwendung in Nutzfahrzeugen geeignet, die im Bereich der angetriebenen Hinterachse über ein sogenanntes Doppelachs- oder Tandemachsaggregat verfügen. In Bezug auf derartige Achsaggregate, die sowohl bei schweren Lastkraftwagen als auch bei Omnibussen zum Einsatz kommen, wird darauf hingewiesen; dass oftmals eine der Achsen angetrieben, während die als Voroder Nachlaufachse ausgeführte zweite Achse nicht angetrieben ist. Selbstverständlich ist es grundsätzlich möglich, Vor- bzw. Nachlaufachsen als angetriebene Achsen auszuführen. Weiterhin ist es denkbar, eine Vor- oder Nachlaufachse als liftbare Achse auszuführen.

Unabhängig von der übrigen Einsatzart einer Achse ist die erfindungsgemäß Achsaufhängung auf bevorzugte Weise in Verbindung mit allen gelenkten Fahrzeugachsen, die nicht in kinematischer Verbindung mit der Vorderachslenkung stehen, also gleichgütlig, ob es sich um Vorlauf-, Nachlauf-, Lift-, angetriebene oder nichtangetriebene gelenkte Starrachsen handelt, einsetzbar. Vorteilhaft einsetzbar ist eine erfindungsgemäß ausgeführte Starrachse bei schweren Nutzfahrzeugen, insbesondere bei Reiseomnibussen. Der Schwingungssensor erfasst bei dieser Anwendung eine Schwingung des Rahmens, der Karosserie und / oder des Aufbaus des Nutzfahrzeugs, insbesondere eines Busgerippes. Die einerseits am Rahmen, der Karosserie oder dem Aufbau und andererseits mit wenigstens einem Bauteil der Lenkvorrichtung in Wirkverbindung stehende Stelleinheit versetzt daraufhin auf der Grundlage der erfassten und durch die Steuereinheit ausgewerteten Schwingung die Starrachse in eine Bewegung relativ zum Rahmen, zur Karosserie oder zum Aufbau des Nutzfahrzeugs. In diesem Zusammenhang wird die Starrachse derart bewegt, dass durch diese Bewegung eine Schwingung in das Fahrzeug eingeleitet wird, die sich zumindest weitgehend mit der ursprünglich erfassten Schwingung des Fahrzeugrahmens, der Karosserie oder des Aufbaus aufhebt.

Teilweise kommt es bei Omnibussen in Abhängigkeit der jeweiligen Fahrgeschwindigkeit und des Fahrbahnuntergrundes zu Schwingungen des Dachbereichs im Verhältnis zum Bodenbereich, wobei sich oftmals das Dach und der Boden in entgegengesetzte Richtungen bewegen. Derartige Schwingungen des Busgerippes treten vor allem deswegen auf, da der Mittelbereich eines Omnibusses im Gegensatz zum Bug- und Heckbereich vor allem aufgrund der großen Fensterflächen weniger steif ist, so dass es zum gegensinnigen Schwingen des Dach- und Fußbodenbereichs kommen kann. Derartige Schwingungen werden von Fahrgästen häufig als unangenehm empfunden und schränken somit den Fahrkomfort eines Omnibusses ein.

In einer ganz besonders geeigneten Ausführungsform der Erfindung ist daher der wenigstens eine Schwingungssensor im Bereich eines Busgerippes, vorzugsweise im Dach- und / oder Fußbodenbereich, angeordnet. Bei dieser speziellen Weiterbildung wird eine Schwingung des Busgerippes durch den Schwingungssensor erfasst und die Messdaten an die Steuereinheit übertragen. Auf der Grundlage dieser Messwerte wird durch die Steuereinheit ein Steuersignal generiert, das an die Stelleinheit der Lenkvorrichtung übertragen und unter dessen Zugrundelegung die Lenkvorrichtung von der Stelleinheit schließlich derart bewegt wird, dass über die gelenkte Starrachse Schwingungen in das Busgerippe eingekoppelt werden, die sich mit den gemessenen Schwingungen des Busgerippes im Dach- und/oder Fußbodenbereich kompensieren. Aufgrund der geschilderten Maßnahme ist es somit auf bevorzugte Weise möglich, den Fahrkomfort für die Fahrgäste zu verbessern, so dass ansonsten im Bereich des Fahrgastraums als störend empfundene Schwingungen bzw. Vibrationen nicht mehr wahrgenommen werden.

Im Folgenden wird die Erfindung ohne Beschränkung des allgemeinen Erfindungsgedankens unter Bezugnahme auf die Figuren näher erläutert. Es zeigen:
- Fig. 1:: Achsaufhängung mit zwei Längs- und einem Dreieckslenker sowie mit einem Stellzylinder als Stelleinheit und einem Hebel als Koppelelement;
- Fig. 2:: Achsaufhängung mit zwei Längs- und einem Dreleckslenker sowie zwei Stellzylindern als Stelleinheit;
- Fig. 3:: Achsaufhängung mit einem Dreieckslenker und zwei jeweils als Stelleinheit ausgeführten Längslenkern;
- Figur 4:: Achsaufhängung mit zwei Längs- und einem Dreieckslenker sowie zwei an den Längslenkern angelenkten Stellzylindern;
- Figur 5:: Sonderfall der Schwingungseinkoppelung zu Figur 4;
- Figur 6:: Achsaufhängung mit zwei Längs- und einem Dreieckslenker, einer Spurstange sowie einem Stellzylinder;
- Figur 7:: Isometrische Ansicht einer angetriebenen Starrachse mit vier Stellzylindern in Neutralstellung;
- Figur 8:: Draufsicht einer angetriebenen Starrachse mit vier Stellzylindern in Neutralstellung
- Figur 9:: Seitenansicht einer angetriebenen Starrachse mit vier Stellzylinder in Neutralstellung
- Figur 10:: Drauf und Seitenansicht einer angetriebenen Starrachse mit vier Stellzylindern und Bewegung der Achse um die vertikale z-Achse;
- Figur 11:: Drauf- und Seitenansicht einer angetriebenen Starrachse mit vier Stellzylindern und Bewegung der Achse um die quer zur Fahrtrichtung verlaufenden y-Achse;
- Figur 12:: Drauf- und Seitenansicht einer angetriebenen Starrachse mit vier Stellzylindern und Bewegung der Achse entlang der in Fahrtrichtung verlaufenden X-Achse:
- Figur 13:: Drauf- und Seitenansicht einer angetriebenen Starrachse mit vier Stellzylindern und translatorischer Bewegung der Achse in einer Ebene, die von der quer zur Fahrtrichtung verlaufenden y-Achse sowie der entlang der Fahrtrichtung verlaufenden x-Achse aufgespannt wird.

Die Figuren zeigen jeweils gelenkte Starrachsen 1, wie sie bei Nutzfahrzeugen zum Einsatz kommen. Hierbei wird die Erfindung beispielhaft anhand der Anlenkung von angetriebenen Omnibusstarrachsen beschrieben Da sich der Motor bei Omnibussen in der Regel im Heckbereich befindet, erfolgt die Anbindung der als Gelenkwelle ausgeführten Antriebswelle auf der Rückseite der Achse 1. Von der Achse aus gesehen erstrecken sich die Längs- 4, 5 und Dreieckslenker 2 somit in Fahrtrichtung des Omnibusses.

Der bevorzugte Einsatz der erfindungsgemäß ausgeführten, steuerbaren Achsanlenkung bei Omnibussen, insbesondere bei Reiseomnibussen, ist vor allem darauf zurückzuführen, dass bei dreiachsigen Reisebussen oftmals trotz guter Straßenverhältnisse bei Geschwindigkeiten zwischen 80 km/h und 100 km/h Schwingungen des Aufbaus, also des Busgerippes auftreten. In diesen Fällen beginnt das Dachgerippe mit einer Schwingung quer zur Fahrtrichtung. Das Fußbodengerippe wird ebenfalls zum Schwingen quer zur Fahrtrichtung, allerdings in entgegengesetzter Richtung, angeregt.

Da das Dachgerippe mit dem unteren Gerippe nur über vergleichsweise wenige steife Fensterholme und den Bug- und das Heckgerippe verbunden ist, kommt es vor, dass das Dach an dieser Stelle beispielsweise nach links, während das Bodengerippe nach rechts schwingt. Dieses gegenläufige Schwingungsverhalten wird in bestimmten Sitzreihen als unkomfortable Vibration durch den Fahrgast wahrgenommen. Die vorbeschriebenen Schwingungen des Busgerippes, die selbstverständlich in ähnlicher Form in Fahrzeugrahmen, Fahrzeugkarosserien oder auch in Aufbauten von Lastkraftwagen bzw. deren Anhängern und / oder Aufliegern auftreten können, werden auf bevorzugte Weise mit den im Folgenden näher erläuterten Achsaufhängungen gelenkter Hinterachsen ausgeglichen.

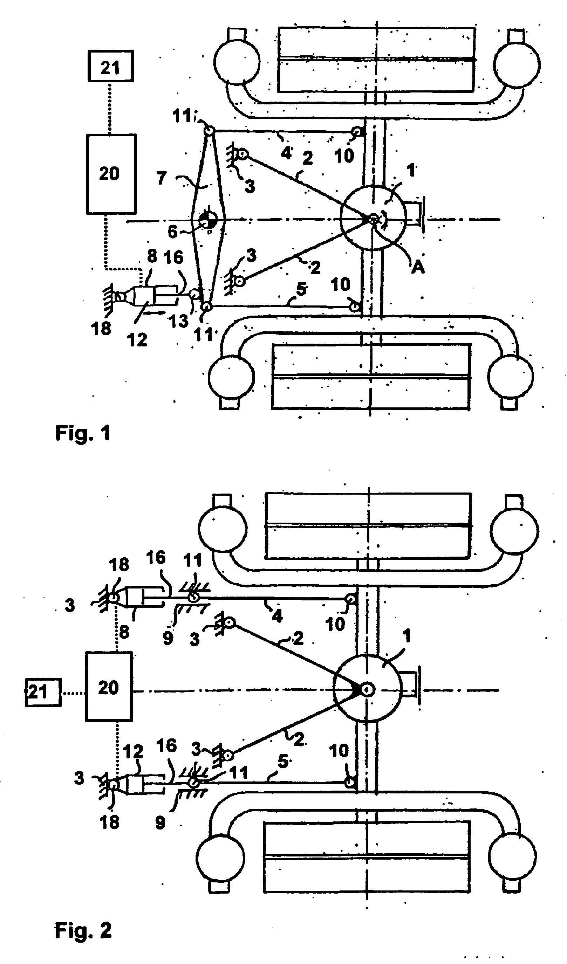

Figur 1 zeigt eine gelenkte Hinterachse 1 eines Nutzfahrzeugs, die kinematisch nicht mit der Vorderachselenkung verbunden ist und die an ihren Enden jeweils Räder mit einer Zwillingsbereifung aufweist. Die starre Hinterachse 1 ist hierbei über einen Dreieckslenker 2 mit dem Busgerippe 3 verbunden. Der Dreieckslenker 2 ist in seinem Kniebereich über ein Lager, vorzugsweise ein Pratzenlager, mit dem Achskörper der Starrachse 1 verbunden. Die beiden Schenkel des Dreieckslenkers 3 sind mit Hilfe geeigneter Lagerböcke mit dem Busgerippe 3 des Reisebusses verbunden. Ferner sind zwei Längslenker 4, 5 vorgesehen, die jeweils einseitig mittels geeigneter Lager 10 mit der Starrachse 1 verbunden sind und auf ihrer achsfernen Seite über ein Koppelelement 7 mit dem Busgerippe verbunden sind. Die Verbindung der Längslenker 4, 5 mit dem Koppelelement 7 wird durch die Lager 11 hergestellt. Das Koppelelement 7 ist in näherungsweise horizontaler Richtung um den Drehpunkt 6 derart drehbar gelagert, dass bei Drehung des Koppelelements 7 beide Längslenker 4, 5 in ihrer Erstreckungsrichtung bewegt werden.

Weiterhin steht das Koppelelement 7 auf einer Seite mit einer als Stellzylinder 12 ausgeführten Stelleinheit 8 in Wirkverbindung. Der Stellzylinder 12 verfügt über eine hydraulisch bewegbare Stellstange 16, die wiederum außermittig an dem Koppelelement 7 angelenkt ist. Der Stellzylinder 12 ist seinerseits über ein geeignetes Lager 18 am Busgerippe 3 befestigt. Durch Betätigen des Stellzylinders 8 ist das Koppelelement 7 in eine horizontale Drehbewegung um den Drehpunkt 6 überführbar. Erfolgt eine Drehbewegung, beispielsweise im Uhrzeigersinn, so wird der Längslenker 4 gedrückt, während der auf der gegenüberliegenden Fahrzeugseite befindliche Längslenker 5 vom Koppelelement gezogen wird. Aufgrund dieser Bewegungen des Koppelelements 7 sowie der Längslenker 4, 5 wird schließlich die gelenkte Hinterachse 1 um den Punkt A im Kniebereich des Dreleckslenkers 2 gedreht.

Die Drehbewegung der gelenkten Hinterachse 1 um den Drehpunkt "A" bewirkt, dass die Masse der Hinterachse 1 beschleunigt wird und so in Abhängigkeit der Drehgeschwindigkeit entsprechende Reaktionskräfte erzeugt werden. Diese Reaktionskräfte werden über die Lager bzw. Anlenkungspunkte des Dreieckslenkers 2 sowie des Stellzylinders 12 in das Busgerippe 3 eingeleitet und schließlich vom Busgerippe 3 aufgenommen bzw. absorbiert.

Die Steuerung des Stellzylinders 12 wird mit Hilfe einer geeigneten Sensorik sowie eine Steuereinheit 20 realisiert. In diesem Zusammenhang ist ein Schwingungssensor 21 vorgesehen, der vorzugsweise im Dach und / oder Fußbodenbereich des Reisebusses vorgesehen ist. Treten Schwingungen in diesen Bereichen auf, so werden sie vom Schwingungssensor 21 detektiert und entsprechende Messwerte an die Steuereinheit 20 übertragen, In der Steuereinheit 20 werden unter Zugrundelegung der erfassten Schwingungswerte Steuersignale generiert, die an den Stellzylinder 12 übertragen werden. Auf der Grundlage der Steuersignale wird der Stellzylinder 12 nunmehr derart bewegt, dass über die einen Dreieckslenker 2, zwei Längslenker 4, 5 und entsprechende Lager- bzw. Verbindungselemente aufweisende Lenkvorrichtung sowie die Starrachse 1 vorzugsweise periodisch Reaktionskräfte in das Busgerippe 3 eingeleitet werden. Hierbei werden die eingeleiteten Reaktionskräfte derart dimensioniert, dass hierdurch Schwingungen im Busgerippe 3 hervorgerufen werden, die sich mit den durch den Messsensor 21 erfassten Schwingungen des Busgerippes 3 zumindest weitgehend aufheben bzw. diese tilgen.

Durch die zuvor beschriebene Schwingungstilgung, die durch eine aktiv herbeigeführte Über lagerung unterschiedlicher Schwingungen erreicht wird, ist es somit auf bevorzugte Weise möglich, einen im Hinblick auf das Schwingungsverhalten von Nutzfahrzeugen, insbesondere von Reisebussen, hinreichenden Fahrkomfort sicherzustellen.

In diesem Zusammenhang wird der Vollständigkeit halber darauf hingewiesen, dass das erfindungsgemäße Funktionsprinzip, also das Messen von Schwingungen, deren Auswertung sowie die Einleitung einer weiteren Schwingung in ein Busgerippe bzw. in eine Fahrzeugkarosserie oder in einen Fahrzeugrahmen mit Hilfe einer Starrachslenkung auf der Grundlage der erfassten Schwingungen mit allen in den Figuren 1 bis 13 dargestellten Achsanlenkungen durchführbar ist. Vor allem ist mit allen in den Figuren 1 bis 13 gezeigten Anlenkungen von gelenkten Achsen auf bevorzugte Weise eine Einkoppelung von Schwingungen in ein Busgerippe, einen Fahrzeugaufbau oder einen Fahrzeugrahmen möglich, um Schwingungen, die in Abhängigkeit der Fahrbahneigenschaften sowie der Fahrgeschwindigkeit auftreten, zu kompensieren bzw. zu tilgen. Hierbei kann der aktive Eingriff in die Lenkung der Starrachse zur Schwingungskompensation mit beliebiger Frequenz und Amplitude vorgenommen werden, um etwa Querkräfte und / oder Momente in einen Fahrzeugaufbau einzuleiten, die geeignet sind, Aufbauschwingungen zu tilgen bzw. zu dämpfen.

Bei der in Figur 2 dargestellten Achsaufhängung einer gelenkten Hinterachse 1 wird die Lenkung der Starrachse 1 ebenfalls durch eine gegenläufige Bewegung der auf- unterschiedlichen Seiten des Fahrzeugs angeordneten Längslenker 4, 5 bewirkt. Im Gegensatz zu der in Figur 1 dargestellten Ausführungsform ist allerdings jeder Längslenker 4, 5 mit einer als Stellzylinder 12 ausgeführten Stelleinheit 8 verbunden. Die achsfemen Lager 11 der Längslenker 4, 5 sind mit den Stellstangen 16 der Stellzylinder 12 verbunden und jeweils in einem Schubgelenk 9, das mit dem Busgerippe verbunden ist, geführt. Durch Verstellen der Stellstangen 16 erfolgt jeweils über die Schubgelenke 9 die Verschiebung der Längslenker 4, 5 annähernd parallel zur Fahrzeuglängsachse. Eine Verbindung beider Längslenker 4, 5 miteinander existiert in diesem Fall nicht. Vielmehr sind zwei Stellzylinder 12 vorgesehen, die jeweils in Wirkverbindung mit den Längslenkern 4, 5 stehen.

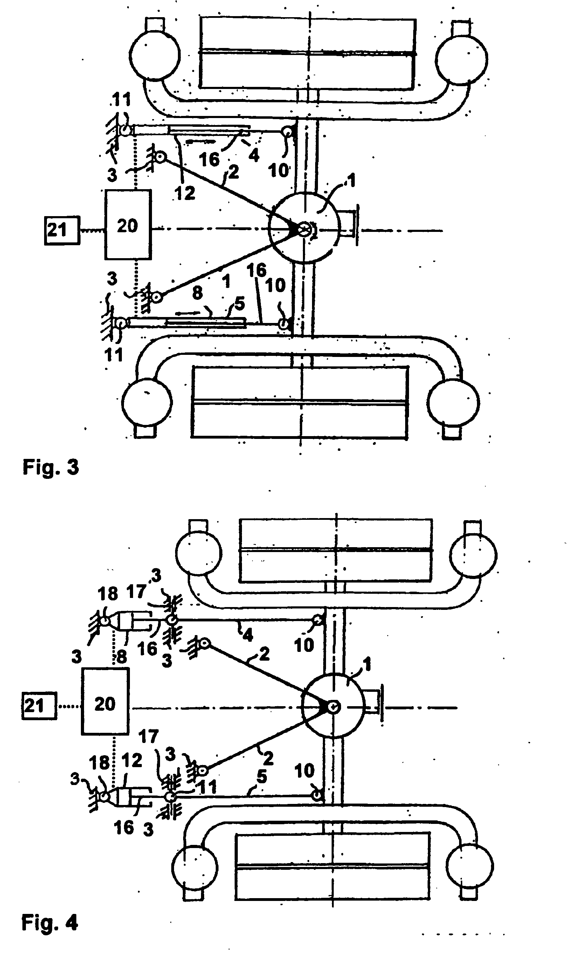

Figur 3 zeigt eine weitere geeignete Ausführungsform der erfindungsgemäßen Achsaufhängung, bei der die Längslenker 4, 5 selbst nach Art von Stellzylindern 12 ausgeführt sind. Die Bewegung der gelenkten Hinterachse 1 erfolgt in diesem Fall durch eine Verkürzung oder Verlängerung der als Stellzylinder 12 ausgeführten Längslenker 4, 5. Stelleinheit 8 und Längslenker 4, 5 bilden somit jeweils ein Bauelement.

Wird mit Hilfe eines Schwingungssensors 21 im Bereich eines Nutzfahrzeugaufbaus eine Schwingung detektiert, so wertet die Steuereinheit 20 diese aus und sendet daraus abgeleitete Stellsignale an die beiden als Stellzylinder 12 ausgeführten Längslenker 4, 5. Entsprechend den übertragenden Stellsignalen werden daraufhin die Längslenker 4, 5 verkürzt bzw. verlängert, so dass die Hinterachse 1 in vorzugsweise periodische Bewegungen versetzt wird. Die Stärke der Reaktionskräfte sowie die Frequenz ihres Auftretens werden derart gewählt, dass die auf diese Weise aktiv in den Nutzfahrzeugaufbau 3 eingeleiteten Schwingungen den mit dem Schwingungssensor detektierten Schwingungen auf geeignete Weise überlagert werden, um so die erfassten Schwingungen des Nutzfahrzeugaufbaus 3 zu tilgen.

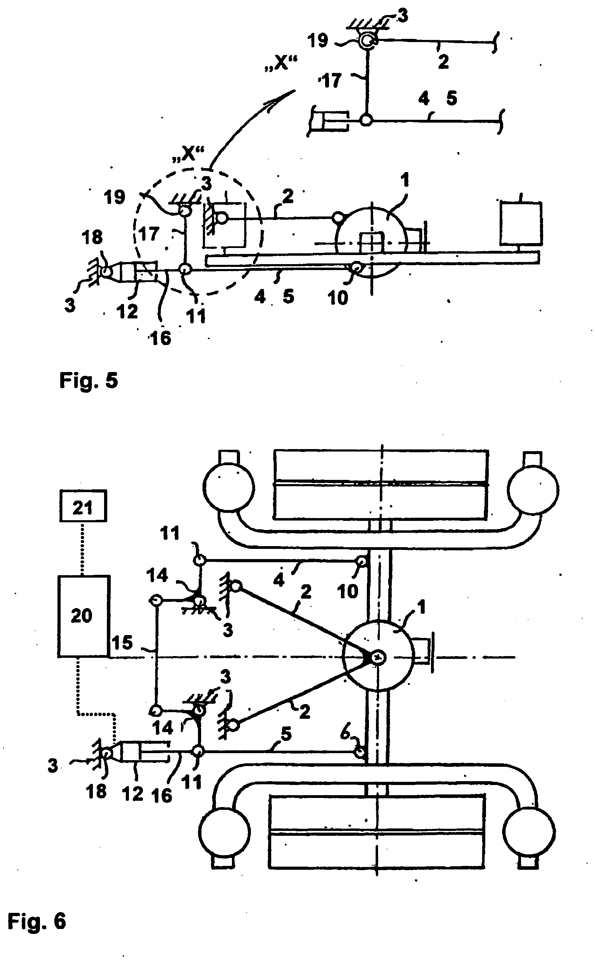

Bei der in den Figuren 4 und 5 dargestellten Ausführungsform der erfindungsgemäßen Achsaufhängung werden die Längslenker 4, 5 von zwei separat am Busgerippe 3 befestigten Stellzylindern 12 bewegt. Im Gegensatz zu den in Figur 2 dargestellten Längslenkern 4, 5 sind die Längslenker 4, 5 jedoch rahmenseitig nicht in einem Schubgelenk 9 gelagert, sondern drehbeweglich über einen auf jeder Fahrzeugseite vorgesehenen Vertikallenker 17 mit dem Busgerippe 3 verbunden. Hierbei ist in Figur 4 eine Draufsicht und in Figur 5 eine Seitenansicht der Achsaufhängung dargestellt.

Durch eine Stellbewegung des Stellzylinders 12, insbesondere der Stellstangen 16, werden die Längslenker 4, 5 in eine Bewegung annähernd parallel zur Fahrzeuglängsachse versetzt. Die Führung der Längslenker 4, 5 wird hierbei jeweils durch die Vertikallenker 17 sicher gestellt. Auch in diesem Fall werden die Längslenker 4, 5 zur Drehung der Starrachse in entgegengesetzte Richtungen bewegt, wobei das achsferne Lager 11 der Längslenker 4, 5 jeweils eine Drehbewegung um das mit dem Busgerippe verbundene Lager des Vertikallenkers 19 ausführt. Werden die Längslenker 4, 5 um diese Drehpunkte bildende Lager 19 gegensinnig verschoben, so schwenkt auch in diesem Fall die gelenkte Starrachse 1 um den Drehpunkt A, also den Anlenkpunkt im Kniebereich des Dreieckslenkers 2 an die Starrachse 1. Der Antrieb und die Sperrrichtung erfolgt wie bei den übrigen Ausführungsformen mittels einer geeigneten Ansteuerung der Stellzylinder 12.

Der mit "X" gekennzeichnete Ausschnitt der in Figur 5 dargestellten Seitenansicht zeigt eine ganz spezielle Ausführungsform einer Achsaufhängung. Der Unterschied zu der ansonsten in den Figuren 4 und 5 gezeigten Achsaufhängung besteht hierbei darin, dass die beiden Schenkel des Dreieckslenkers 2 an ihren achsfernen Enden jeweils gemeinsam mit dem oberen Ende des Vertikaltenkers 17 mittels eines gemeinsamen Lagerbocks am Busgerippe 3 befestigt sind.

Die in Figur 6 dargestellte Achsaufhängung gleicht der in Figur 1 dahingehend, dass zur Lenkung der Starrachse 1 lediglich ein Stellzylinder 12 als Stelleinheit 8 sowie ein Koppelelement 7 vorgesehen sind. Das Koppelelement 7 wird bei dieser technischen Lösung im Wesentlichen durch zwei Umlenkhebel 14, eine Spurstange 15 sowie geeignete Lager- bzw. Verbindungselemente gebildet. Die Längslenker 4, 5 sind über die beiden Umlenkhebel 14, die ihrerseits am Busgerippe 3 befestigt sind, sowie eine Spurstange 15 beweglich miteinander verbunden.

Der Stellzylinder 12 kann wahlweise auf der rechten oder linken Seite am Busgerippe befestigt sein. Durch Betätigen des Stellzylinders 12 wird der Längslenker 5, der sich auf der gleichen Fahrzeugseite wie der Stellzylinder 12 befindet, direkt bewegt, während der Längslenker 4, der sich auf der gegenüberliegenden Fahrzeugseite befindet, über die Umlenkhebel 14 sowie die Spurstange 15 bewegt wird.

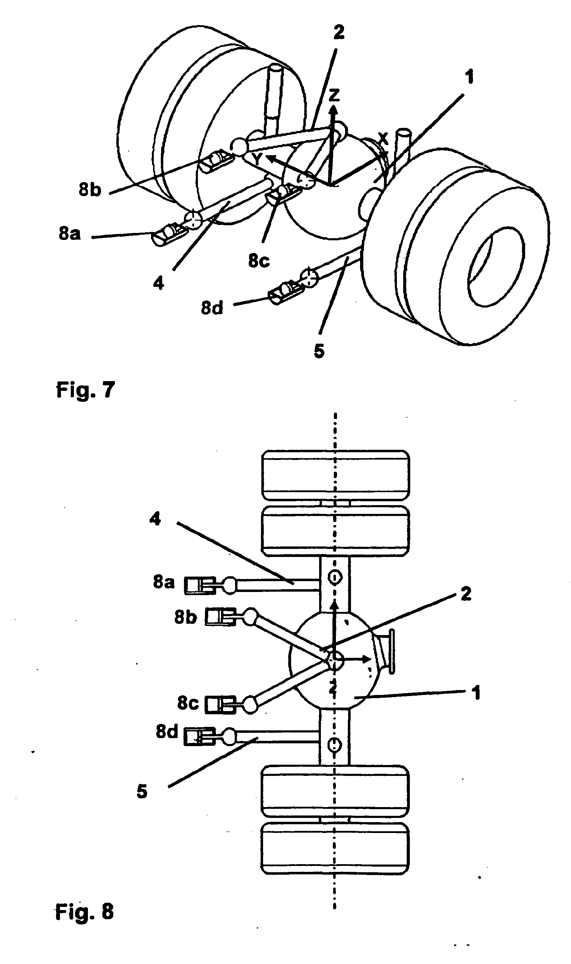

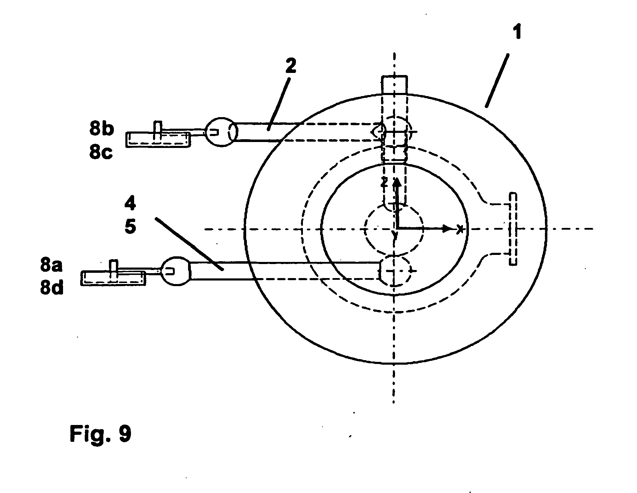

In den Figuren 7 bis 9 ist jeweils eine angetriebene Starrachse 1 mit einer erfindungsgemäß ausgeführten Anlenkung dargestellt. Hierbei handelt es sich bei Figur 7 um eine isometrische Ansicht, bei Figur 8 um eine Draufsicht und bei Figur 9 um eine Seitenansicht der angetriebenen Starrachse 1. In Fahrtrichtung auf der Rückseite der Achse 1 befindet sich ein Flansch zur Befestigung einer Gelenkwelle. Die dargestellte Achse 1 wird auf bevorzugte Weise als Antriebsachse eines Omnibusses eingesetzt.

Im Gegensatz zu den bereits erläuterten Achsanlenkungen sind in diesem Fall sowohl an beiden Schenkeln des Dreieckslenkers 2 als auch an den Längslenkern 4, 5 als Stellzylinder ausgebildete Stelleinheiten 8a, 8b, 8c, 8d vorgesehen, mit denen die Achse in Abhängigkeit einer von einem Schwingungssensor 21 detektierten Schwingung und des daraus in einer Steuereinheit 20 generierten Stellsignals derart bewegt wird, dass die detektierte Schwingung in der Fahrzeugkarosserie oder dem -aufbau zumindest weitgehend durch die zusätzlich eingeleitete Schwingung getilgt wird. Selbstverständlich ist es auch im Zusammenhang mit dem in den Figuren 7 bis 9 dargestellten Ausführungsbeispiel denkbar, die Kombination aus Stellzylinder und Lenker durch einen entsprechend langen Stellzylinder zu ersetzten, wobei die Stellstange des Stellzylinders in diesem Fall die Funktion des Lenkers mit übernimmt.

Figur 7 zeigt die Starrachse in Geradeausfahrt. Die Stellzylinder 8a, 8b, 8c, 8d sind in Neutralstellung, so dass weder eine Bewegung der Achse 1 längs der y-Achse noch eine Drehung um die z-Achse erfolgt. Genauso ist in diesem Betriebszustand kein Höhenversatz vorhanden, so dass ebenfalls keine Bewegung in vertikaler Richtung erfolgt.

In Ergänzung zu der Darstellung der Starrachse 1 gemäß Figur 7 zeigt Figur 8 eine Draufsicht und Figur 9 eine Seitenansicht der Achse 1, wobei sich die Stellzylinder 8 jeweils, wie zuvor geschildert, in Neutralstellung befinden.

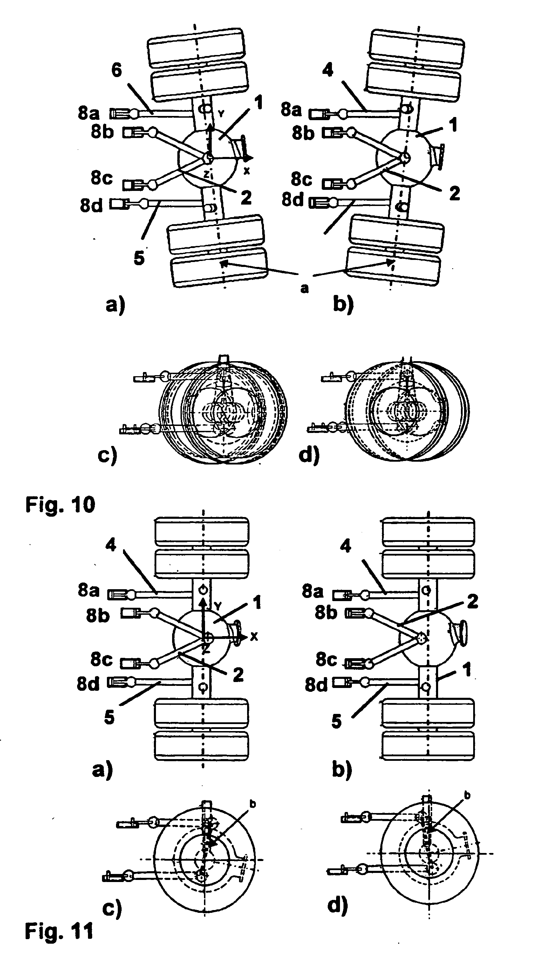

In Figur 10 ist wiederum eine angetriebene Starrachse1 gezeigt, bei der sowohl die Schenkel des Dreieckslenkers 2 als auch die Längslenker 4, 5 über als Stellzylinder ausgeführte Stelleinheiten 8 bewegbar mit dem Fahrzeugrahmen und/oder der Fahrzeugkarosserie bzw. dem Fahrzeugaufbau verbunden sind. Im Gegensatz zu dem in den Figuren 7 bis 9 gezeigten Fahrzustand ist in Figur 10a eine Bewegung der Starrachse 1 um die z-Achse nach links und in der Figur 10b um die z-Achse nach rechts dargestellt. Die Drehung erfolgt um das zentrale Gelenk im Kniebereich des Dreieckslenkers 2. Wie den jeweils zugehörigen Seitenansichten 10c sowie 10d zu entnehmen ist, findet auch hier zusätzlich zur Drehbewegung um die z-Achse keine Bewegung der Starrachse in vertikaler Richtung statt. Ferner kann der Drehpunkt durch Variation des Verhältnisses vom Zylinderhub der Stellzylinder 8a und 8d an den Längslenkern 4, 5 zum Zylinderhub der am Dreieckslenker 2 vorgesehenen Stellzylinder 8b und 8c entlang der Verbindungsgeraden "a" der achsseitigen Gelenke von Längs- und Dreieckslenkem verschoben werden.

Die Verstellung der Stellzylinder 8 erfolgt in Abhängigkeit eines Stellsignals, das von einer Steuereinheit 20 erzeugt wird. Um die dargestellte Rotation der Achse 1 erreichen zu können, werden die äußeren Stellzylinder 8a und 8d in entgegen gesetzter Richtung bewegt, während die inneren Stellzylinder 8b und 8c in Neutralstellung verbleiben.

Auch in Figur 11 ist eine angetriebene Starrachse1 gezeigt, bei der sowohl die Schenkel des Dreieckslenkers 2 als auch die Längslenker 4, 5 über als Stellzylinder ausgeführte Stelleinheiten 8 bewegbar mit dem Fahrzeugrahmen und/oder der Fahrzeugkarosserie bzw. dem Fahrzeugaufbau verbunden sind. Im Gegensatz zu dem in den Figuren 7 bis 9 sowie 10 gezeigten Fahrzustand ist in Figur 11 eine Bewegung der Starrachse 1 um die y-Achse, also eine Rotation der Achse in einer vertikalen Ebene dargestellt. Bei dem in Figur 11a in einer Draufsicht und in 11c in einer Seitenansicht dargestellten Fahrzustand handelt es sich um eine Rotation der Achse 1 in Fahrzeuglängsrichtung, also nach vorne, während die Figuren 11b und d eine Rotation der Achse 1 gegen die Fahrzeuglängsrichtung, also nach hinten, zeigen. Eine Verlagerung der angetriebenen Starrachse 1 in vertikaler Richtung oder eine Bewegung um die z-Achse findet nicht statt. Die Rotation der angetriebenen Achse 1 wird in diesem Fall dadurch bewirkt, dass die an den Längslenkern 4, 5 angreifenden Stellzylinder 8a und 8d gleichsinnig und die an dem Dreieckslenker angreifenden Stellzylinder 8b und 8c ebenfalls gleichsinnig, jedoch gegensinnig zu den an den Längslenkern 4, 5 angreifenden Stellzylindern 8a und 8d bewegt werden. Der Drehpunkt kann durch Variation des Verhältnisses vom Zylinderhub der Stellzylinder 8a und 8d an den Längslenkern 4, 5 zum Zylinderhub der am Dreieckslenker 2 vorgesehenen Stellzylinder 8b und 8c entlang der Verbindungsgeraden "b", die durch die achsseitigen Gelenke von Längs- und Dreieckslenkern verläuft, verschoben werden.

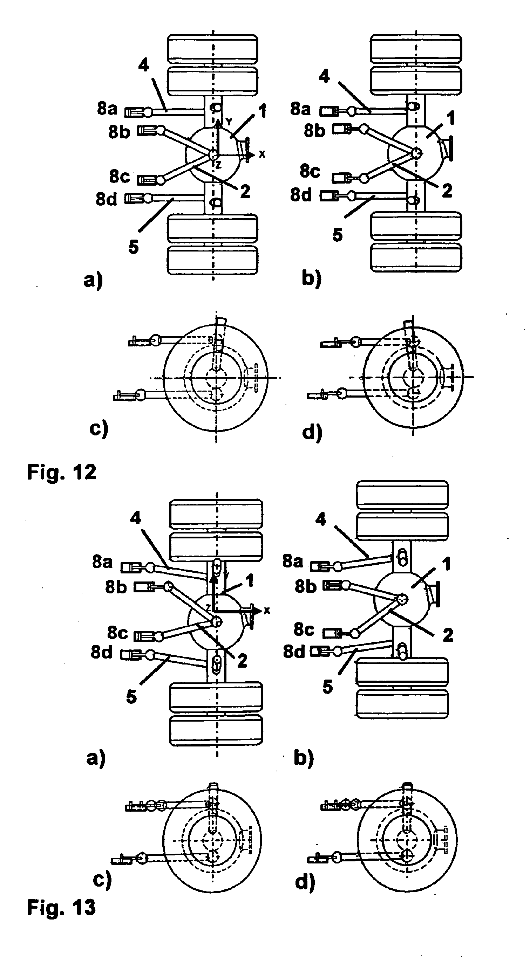

Des Weiteren ist in Figur 12 ein weiterer Betriebszustand einer Starrachse 1 mit erfindungsgemäß ausgeführter Anlenkung, die über vier als Stellzylinder ausgebildete Stelleinheiten 8a, 8b, 8c, 8d verfügt, dargestellt. In der Figur 12 ist eine durch eine Betätigung der Stellzylinder 8 hervorgerufene Verschiebung der Starrachse 1 in x-Richtung dargestellt, wobei die Figuren 12a und 12c in Drauf- bzw. Seitenansicht eine Verschiebung der Achse 1 in Fahrtrichtung und die Figuren 12b und 12d gegen die Fahrtrichtung zeigen. Um eine derartige Bewegung der Starrachse in x-Richtung bewirken zu können, erfolgt die Steuerung der Anlenkung derart, dass alle vier Stellzylinder 8a, 8b, 8c, 8d gleichsinnig bewegt werden, und zwar jeweils in die gewünschte Bewegungsrichtung der Starrachse 1.

Abschließend zeigt Figur 13 einen Betriebszustand einer Starrachse 1 mit erfindungsgemäß ausgeführter Anlenkung, die über vier als Stellzylinder ausgebildete Stelleinheiten 8a, 8b, 8c, 8d verfügt, in dem die Achse entlang der y-Achse, also quer zur Fahrtrichtung, verschoben ist. Hierbei ist den Figuren 13a und 13c in Drauf- und Seitensicht eine Verlagerung auf die in Fahrtrichtung gesehen linke Seite des Fahrzeugs zu entnehmen, während die Figuren 13b und 13d eine Verlagerung der Achse nach rechts zeigen.

Um in Abhängig der Betriebsparameter eines Omnibusses, insbesondere seines Schwingungsverhaltens, eine Verlagerung der erfindungsgemäß angelenkten Starrachse 1 in Y-Richtung erzielen zu können, verbleiben die äußeren, an die Längslenker 4, 5 angebundenen Stellzylinder 8a und 8d in Neutralstellung, während die inneren, an den Schenkeln des Dreieckslenkers angebundenen Stellzylinder 8b und 8c jeweils gegensinnig bewegt werden. In den in Figur 13 gezeigten Betriebszuständen wurden für Verlagerung der Achse nach links, wie in den Figuren 13a und 13c dargestellte, der rechte 8b von den am Dreieckslenker 2 angreifenden Stellzylindern 8b, 8c bezogen auf die Fahrtrichtung nach hinten und der linke 8c nach vorne bewegt. Für eine Verlagerung der Starrachse nach rechts, wie in den Figuren 13b und 13d dargestellt werden die Stellzylinder 8b und 8c in entgegen gesetzter Richtung bewegt.

Mit den auf zuvor erläuterte Weise gelenkten Starrachsen, jeweils kombiniert mit einer geeigneten Steuerung sowie Sensorik ist es auf bevorzugte Weise möglich, durch Schwingungseinkopplung Schwingungen, die im Bereich eines Fahrzeugaufbaus, insbesondere in einem Busgerippe, auftreten, zu kompensieren. Dem Lenksystem wird auf diese Weise quasi eine Lenkschwingung, in Form einer Rotation um die z- und/oder y-Achse und/oder eine translatorische Verlagerung in x- und/oder in y-Richtung mit beliebiger Frequenz und Amplitude überlagert, um so bedarfsgerecht Momente und/oder Querkräfte in die Fahrzeugkarosserie oder den Fahrzeugaufbau einzuleiten. Durch die zusätzlich eingeleiteten Schwingungen können auf vergleichsweise einfache Weise in der Fahrzeugkarosserie und/oder im Fahrzeugaufbau auftretende Schwingungen getilgt bzw. gedämpft werden.

Vorteilhaft an den beschriebenen Lenkvorrichtungen für gelenkte Starrachsen zur Schwingungstilgung ist einerseits, dass die Anzahl der in einem Fahrzeug benötigten Schwingungstilger zumindest reduziert werden kann und andererseits dass die Schwingungstilgung eine Zusatzfunktion darstellt, die die gelenkten Starrachsen ohne Einschränkung der im Übrigen benötigten Funktionalität übernehmen können.

So ist es bspw. denkbar, dass die anhand der Figuren 1 bis 13 näher erläuterten Stelleinheitten eine gelenkte Hinterachse je nach fahrdynamischer Notwendigkeit gleichsinnig oder gegensinnig in Bezug auf den Lenkeinschlag an der Vorderachse bewegen. Entsprechende Parameter können in der Steuereinheit hinterlegt werden. Hierbei bietet eine gegensinnige Betätigung beider Achsen den Vorteil, dass das Fahrzeug kleinere Wendekreise durchfahren kann. Eine gleichsinnige Betätigung hingegen erhöht die Fahrstabilität bei Spurwechseln während einer schnellen Fahrt des Fahrzeugs. Sofern jeder Achslenker separat über einen Stellzylinder angelenkt ist, kann die Achse auf vorteilhafte Weise elektronisch eingestellt werden. Mit Hilfe einer geeigneten Einstellung der Stellzylinder, wie insbesondere im Zusammenhang mit den Figuren 10 bis 13 erläutert, ist es hierbei möglich, die Positionierung der Achse relativ zur Gelenkwelle zu optimieren, die Achse mittig zum Fahrzeug zu positionieren und/oder einen Geradeauslauf des Fahrzeugs zu gewährleisten bzw. den sogenannten Dackellauf zu verhindern. Ferner ist es bei Einsatz einer elektronischen Regelung der Stellzylinder möglich, Ungenauigkeiten der Kinematik auszugleichen. Durch Beeinflussung der Bewegung einer Starrachse in vertikaler Richtung ist es weiterhin denkbar, die Fahrzeugfederung zu unterstützen und die Federwege weitgehend konstant zu halten. Mit einer derartigen Maßnahme kann beispielsweise die Lebensdauer einer Gelenkwelle verlängert und/oder ein gleichzeitiges Anschlagen in den hierfür vorgesehenen Gummipuffern beim Einfedern, insbesondere der Federbälge, erreicht werden.

Hervorzuheben ist weiterhin, dass trotz der beschriebenen Maßnahmen, insbesondere einer aktiven Übersteuerung der Lenkvorrichtung zur Schwingungskompensation, die Federung sowie die Kinematik der als Starrachse ausgeführten Hinterachse durch die beschriebene Lenkvorrichtung weitgehend unbeeinflusst bleiben.

### Bezugszeichenliste

- 1: gelenkte Starrachse
- 2: Dreieckslenker
- 3: Rahmen / Busgerippe
- 4: Längslenker
- 5: Längslenker
- 6: Drehpunkt des Koppelelements
- 7: Koppelelement
- 8: Stelleinheit
- 9: Schubgelenk
- 10: achsseitiges Lager des Längslenkers
- 11: achsfernes Lager des Längslenkers
- 12: Stellzylinder
- 13: Verbindungselement Stelleinheit/Längslenker
- 14: Umlenkhebel
- 15: Spurstange
- 16: Stellstange
- 17: Vertikallenker
- 18: Lager der Stelleinheit am Rahmen oder Busgerippe
- 19: Lager des Vertikallenkers am Rahmen oder Busgerippe
- 20: Steuereinheit
- 21: Schwingungssensor

## Patentansprüche

1. Achsaufhängung einer gelenkten Starrachse (1), die über eine Lenkvorrichtung (2, 4, 5) beweglich mit einem Rahmen, einer Karosserie oder einem Aufbau (3) eines Fahrzeugs verbunden ist, wobei die Lenkvorrichtung (2, 4, 5) wenigstens eine Stelleinheit (8) aufweist, durch die eine Bewegung der Starrachse (1) relativ zum Rahmen, zur Karosserie oder zum Aufbau (3) in Abhängigkeit wenigstens eines mittels einer Sensoreinheit erfassten Betriebsparameters des Fahrzeugs steuerbar ist,
**dadurch gekennzeichnet, dass** die Sensoreinheit wenigstens einen Schwingungssensor (21) aufweist, mit dem eine Schwingung wenigstens eines Bauteils des Fahrzeugs erfassbar und an eine Steuereinheit (20) übertragbar ist, in der auf der Grundlage der erfassten Schwingung ein Steuersignal generierbar und an die Stelleinheit (8) weiterleitbar ist, unter dessen Zugrundelegung die Starrachse (1) durch die Stelleinheit (8) derart in Bewegung versetzbar ist, dass durch die Bewegung der Starrachse (8) erzeugte Schwingungen die erfassten Schwingungen des wenigstens einen Bauteils des Fahrzeugs zumindest teilweise kompensieren.

2. Achsaufhängung nach Anspruch 1,
**dadurch gekennzeichnet, dass** die Stelleinheit (8) wenigstens einen pneumatisch, elektrisch und/oder hydraulisch angetriebenen Stellzylinder (12) aufweist.

3. Achsaufhängung nach Anspruch 1 oder 2,
**dadurch gekennzeichnet, dass** die Lenkvorrichtung wenigstens einen Längslenker (4, 5) aufweist.

4. Achsaufhängung nach Anspruch 3,
**dadurch gekennzeichnet, dass** die Stelleinheit (8) mittelbar oder unmittelbar mit dem Längslenker (4, 5) verbunden ist.

5. Achsaufhängung nach Anspruch 3 oder 4,
**dadurch gekennzeichnet, dass** zwischen dem Längslenker (4, 5) und der Stelleinheit (8) ein Koppelelement (7) vorgesehen ist.

6. Achsaufhängung nach Anspruch 5,
**dadurch gekennzeichnet, dass** das Koppelelement (7) als Hebel ausgeführt ist, der zumindest annähernd in horizontaler Richtung drehbar gelagert ist.

7. Achsaufhängung nach Anspruch 3,
**dadurch gekennzeichnet, dass** die Stelleinheit (8) in den Längslenker (4, 5) integriert ist

8. Achsaufhängung nach einem der Ansprüche 1 bis 7,
**dadurch gekennzeichnet, dass** die Lenkvorrichtung einen Dreieckslenker (2) aufweist, der im Kniebereich seiner beiden Schenkel mittels eines Lagers am Achskörper der Starrachse (1) befestigt ist.

9. Achsaufhängung nach Anspruch 7,
**dadurch gekennzeichnet, dass** die gelenkte Starrachse (1) zumindest horizontal um das Lager im Kniebereich des Dreieckslenkers (2) drehbar gelagert ist.

10. Achsaufhängung nach einem der Ansprüche 3 bis 9,
**dadurch gekennzeichnet, dass** der Längslenker (4, 5) und/oder der Dreieckslenker (2) am achsfernen Ende mittelbar oder unmittelbar am Rahmen, an der Karosserie oder am Aufbau (3) des Fahrzeugs befestigt sind.

11. Achsaufhängung nach einem der Ansprüche 1 bis 9,
**dadurch gekennzeichnet, dass** die gelenkte Starrachse (1) als antreibbare Achse ausgeführt ist.

12. Achsaufhängung nach einem der Ansprüche 1 bis 11,
**dadurch gekennzeichnet, dass** die Starrachse (1) als Nachlauf- oder Vorlaufachse ausgeführt ist.

13. Achsaufhängung nach einem der Ansprüche 1 bis 12,
**dadurch gekennzeichnet, dass** zwischen der gelenkten Starrachse (1) und dem Rahmen, der Karosserie und/oder dem Aufbau (3) wenigstens ein Luftfederelement vorgesehen ist.

14. Nutzfahrzeug mit einem Tandemachsmodul, das wenigstens eine gelenkte Starrachse (1) gemäß einem der Ansprüche 1 bis 13 aufweist.

15. Nutzfahrzeug mit einem Tandemachsmodul nach Anspruch 14,
**dadurch gekennzeichnet, dass** der Schwingungssensor (21) eine Schwingung des Rahmens, der Karosserie und/oder des Aufbaus (3) des Nutzfahrzeugs erfasst und die einerseits am Rahmen oder der Karosserie (3) und andererseits mit wenigstens einem Bauteil der Lenkvorrichtung (2, 4, 5) in Wirkverbindung stehende Stelleinheit (8) auf der Grundlage der erfassten und durch die Steuereinheit (20) ausgewerteten Schwingung die Starrachse (1) in eine Bewegung relativ zum Rahmen, zur Karosserie oder zum Aufbau (3) des Nutzfahrzeugs versetzt.

16. Nutzfahrzeug nach Anspruch 14 oder 15,
**dadurch gekennzeichnet, dass** das Nutzfahrzeug ein Omnibus ist und mit dem Schwingungssensor (21) wenigstens eine Schwingung eines Busgerippes (3) erfassbar ist.

## Claims

1. Axle suspension system of an articulated rigid axle (1) which is moveably connected to a frame, a vehicle bodywork or a superstructure (3) of a vehicle by means of a steering device (2, 4, 5), wherein the steering device (2, 4, 5) has at least one actuation unit (8) by means of which a movement of the rigid axle (1) relative to the frame, to the vehicle bodywork or to the superstructure (3) can be controlled as a function of at least one operating parameter of the vehicle which is sensed by means of a sensor unit,
**characterized in that** the sensor unit has at least one vibration sensor (21) with which a vibration of at least a component of the vehicle can be sensed and transmitted to a control unit (20) in which a control signal can be generated on the basis of the sensed vibration and passed on to the actuation unit (8), on the basis of which control signal the rigid axle (1) can be made to move by the actuation unit (8) in such a way that the vibrations generated by the movement of the rigid axle (1) at least partially compensate the sensed vibrations of the at least one component of the vehicle.

2. Axle suspension system according to Claim 1,
**characterized in that** the actuation unit (8) has at least one actuation cylinder (12) which is driven pneumatically, electrically and/or hydraulically.

3. Axle suspension system according to Claim 1 or 2,
**characterized in that** the steering device has at least one longitudinal radius rod (4, 5).

4. Axle suspension system according to Claim 3,
**characterized in that** the actuation unit (8) is indirectly or directly connected to the longitudinal radius rod (4, 5).

5. Axle suspension system according to Claim 3 or 4,
**characterized in that** a coupling element (7) is provided between the longitudinal radius rod (4, 5) and the actuation unit (8).

6. Axle suspension system according to Claim 5,
**characterized in that** the coupling element (7) is embodied as a lever which is mounted so as to be rotatable at least approximately in the horizontal direction.

7. Axle suspension system according to Claim 3,
**characterized in that** the actuation unit (8) is integrated into the longitudinal radius rod (4, 5).

8. Axle suspension system according to one of Claims 1 to 7,
**characterized in that** the steering device has a triangular radius rod (2) which is attached in the knee region of its two limbs to the axle body of the rigid axle (1) by means of a bearing.

9. Axle suspension system according to Claim 7,
**characterized in that** the steered rigid axle (1) is mounted so as to be rotatable at least horizontally about the bearing in the knee region of the triangular radius rod (2).

10. Axle suspension system according to one of Claims 3 to 9,
**characterized in that** the longitudinal radius rod (4, 5) and/or the triangular radius rod (2) are indirectly or directly attached at the end remote from the axle to the frame, to the vehicle bodywork or to the superstructure (3) of the vehicle.

11. Axle suspension system according to one of Claims 1 to 9,
**characterized in that** the steered rigid axle (1) is embodied as a driveable axle.

12. Axle suspension system according to one of Claims 1 to 11,
**characterized in that** the rigid axle (1) is embodied as a trailing axle or a leading axle.

13. Axle suspension system according to one of Claims 1 to 12,
**characterized in that** at least one air suspension element is provided between the steered rigid axle (1) and the frame, the vehicle bodywork and/or the superstructure (3).

14. Commercial vehicle having a tandem axle module which has at least one steered rigid axle (1) according to one of Claims 1 to 13.

15. Commercial vehicle having a tandem axle module according to Claim 14, **characterized in that** the vibration sensor (21) senses a vibration of the frame, of the vehicle bodywork and/or of the superstructure (3) of the commercial vehicle and the actuation unit (8) which is connected operatively, on the one hand, to the frame or the vehicle bodywork (3) and, on the other hand, to at least one component of the steering device (2, 4, 5) makes the rigid axle (1) move relative to the frame, the vehicle bodywork or the superstructure (3) of the commercial vehicle on the basis of the sensed vibration which is evaluated by the control unit (20).

16. Commercial vehicle according to Claim 14 or 15,
**characterized in that** the commercial vehicle is an omnibus and at least one vibration of a bus body (3) can be sensed with the vibration sensor (21).

## Revendications

1. Suspension d'essieu d'un essieu rigide articulé (1) qui est connectée par le biais d'un dispositif de direction (2, 4, 5) de manière mobile à un châssis, une carrosserie ou une caisse (3) d'un véhicule, le dispositif de direction (2, 4, 5) présentant au moins une unité de réglage (8) qui permet de commander un mouvement de l'essieu rigide (1) par rapport au châssis, à la carrosserie ou à la caisse (3) en fonction d'au moins un paramètre de fonctionnement du véhicule détecté au moyen d'une unité de capteur, **caractérisée en ce que** l'unité de capteur présente au moins un capteur de vibrations (21) avec lequel une vibration d'au moins un composant du véhicule peut être détectée et transmise à une unité de commande (20), dans laquelle, sur la base de la vibration détectée, un signal de commande peut être généré et transmis à l'unité de réglage (8), l'essieu rigide (1) pouvant être mis en mouvement par l'unité de réglage (8) sur la base de ce signal de commande de telle sorte que les vibrations produites par le mouvement de l'essieu rigide (1) compensent au moins en partie les vibrations détectées de l'au moins un composant du véhicule.

2. Suspension d'essieu selon la revendication 1,
**caractérisée en ce que** l'unité de réglage (8) présente au moins un cylindre d'actionnement (12) à commande pneumatique, électrique et/ou hydraulique.

3. Suspension d'essieu selon la revendication 1 ou 2,
**caractérisée en ce que** le dispositif de direction présente au moins un bras oscillant longitudinal (4, 5).

4. Suspension d'essieu selon la revendication 3,
**caractérisée en ce que** l'unité de réglage (8) est connectée directement ou indirectement au bras oscillant longitudinal (4, 5).

5. Suspension d'essieu selon la revendication 3 ou 4,
**caractérisée en ce qu'**entre le bras oscillant longitudinal (4, 5) et l'unité de réglage (8) est prévu un élément d'accouplement (7).

6. Suspension d'essieu selon la revendication 5,
**caractérisée en ce que** l'élément d'accouplement (7) est réalisé sous forme de levier qui est supporté au moins approximativement à rotation dans la direction horizontale.

7. Suspension d'essieu selon la revendication 3,
**caractérisée en ce que** l'unité de réglage (8) est intégrée dans le bras oscillant longitudinal (4, 5).

8. Suspension d'essieu selon l'une quelconque des revendications 1 à 7,
**caractérisée en ce que** le dispositif de direction présente un bras oscillant triangulaire (2) qui est fixe dans la région de coude de ses deux branches au moyen d'un palier sur le corps d'essieu de l'essieu rigide (1).

9. Suspension d'essieu selon la revendication 7,
**caractérisée en ce que** l'essieu rigide articulé (1) est supporté à rotation au moins horizontalement autour du palier dans la région de coude du bras oscillant triangulaire (2).

10. Suspension d'essieu selon l'une quelconque des revendications 3 à 9,
**caractérisée en ce que** le bras oscillant longitudinal (4, 5) et/ou le bras oscillant triangulaire (2) sont fixés sur l'extrémité éloignée de l'essieu de manière directe ou indirecte au châssis, à la carrosserie ou à la caisse (3) du véhicule.

11. Suspension d'essieu selon l'une quelconque des revendications 1 à 9,
**caractérisée en ce que** l'essieu rigide articulé (1) est réalisé sous forme d'essieu moteur.

12. Suspension d'essieu selon l'une quelconque des revendications 1 à 11,
**caractérisée en ce que** l'essieu rigide (1) est réalisé sous forme d'essieu porteur ou d'essieu de guidage.

13. Suspension d'essieu selon l'une quelconque des revendications 1 à 12,
**caractérisée en ce qu'**entre l'essieu rigide articulé (1) et le châssis, la carrosserie et/ou la caisse (3) est prévu au moins un élément de ressort pneumatique.

14. Véhicule utilitaire comprenant un module d'essieu tandem qui présente au moins un essieu rigide articulé (1) selon l'une quelconque des revendications 1 à 13.

15. Véhicule utilitaire comprenant un module d'essieu tandem selon la revendication 14,
**caractérisé en ce que** le capteur de vibrations (21) détecte une vibration du châssis, de la carrosserie et/ou de la caisse (3) du véhicule utilitaire et l'unité de réglage (8) en liaison fonctionnelle d'une part sur le châssis ou la carrosserie (3) et d'autre part avec au moins un composant du dispositif de direction (2, 4, 5) met en mouvement par rapport au châssis, à la carrosserie ou à la caisse (3) du véhicule utilitaire l'essieu rigide (1) sur la base de la vibration détectée et analysée par l'unité de commande (20).

16. Véhicule utilitaire selon la revendication 14 ou 15,
**caractérisé en ce que** le véhicule utilitaire est un omnibus et au moins une vibration d'une structure de bus (3) peut être détectée avec le capteur de vibrations (21).
